# EUROPEAN PATENT SPECIFICATION

(11) **EP 1 297 696 B1**
(45) Date of publication and mention of the grant of the patent: **15.06.2005**
(21) Application number: 01923999.5
(22) Date of filing: 19.04.2001
(51) Int. Cl.: H04N 5/913, H04N 7/16, H04N 7/167, H04N 5/00

(54) **DISTRIBUTION SYSTEM**
VERTEILUNGSSYSTEM
SYSTEME DE DISTRIBUTION

(30) Priority: 28.04.2000 NL 1015061
(43) Date of publication of application: 02.04.2003
(73) Proprietor: Viable Digital Entertainment Systems B.V., 1423 RX Uithoorn (NL)
(72) Inventor: SIMSEK, Saim, Güres, NL-1423 RX Uithoorn (NL)
(74) Representative: Van Breda, Jacobus
(86) International application number: PCT/NL2001/000312
(87) International publication number: WO 2001/084835

(56) References cited:
- EP-A- 0 691 787
- EP-A- 0 763 936
- DE-A- 19 905 659

## Description

The invention relates to a distribution system for film or sound information comprising an information source, at least one information transport channel and an information receiver.

Such a distribution system is known in practice. Where such a distribution system for sound information is concerned, it is called radio distribution or wire broadcasting. With respect to film information, a system is known that uses decoders to allow a user to view selected films in his own surroundings. In this latter case, the film information may be distributed both via the ether and via the cable. A feature of this latter system is that the desired film information is selected or ordered by a user and that it has to be paid for.

EP-A-0 691 787 relates to an apparatus and method offering controlled reception of broadcast signals. On the basis of an access-control signal transmitted along with the broadcast signals, the receiver of the broadcast signals is able to process and reproduce said broadcast signals.

EP-A-0 763 936 relates to a digital broadcasting system for audio and/or video information according to the preamble of claim 1. This known broadcasting system is secured against illegal reception and reproduction. The system comprises to that end a digital database on a source computer, at least one information transport channel equipped for transmitting digital information, a converter for converting digital information of a first kind originating from the source computer into information of the second kind wherein during use, the converter divides the digital information of the first kind into blocks, and inserts scrambling information between the blocks for the formation of the information of the second kind, and an information receiver embodied as a data processing machine which is equipped for converting information of the second kind back into information of the first kind, and wherein a reproduction unit for image or sound can be connected to the data processing machine. During use the converter adds to a first block of said blocks a head containing at least address information relating to the information receiver, and status information relating to at least one item selected from a group comprising items a,b and c, wherein a,b and c are defined as:
a. the approved number of occasions the information of the second kind is converted into information of the first kind;
b. the length of time during which the information of the second kind is authorized to be converted into information of the first kind;
c. the authorization for making a copy.

Furthermore the information receiver is embodied with a reconstruction member for converting information of the second kind into information of the first kind, whereby the operation of the reconstruction member depends on at least the status information.

From DE-A-199 05 659 a system is known for the distribution of sound or visual information comprising a source computer, an information transport channel, and an information receiver. The information is digital and transferred through the internet from the source computer to the information receiver.

For the distribution of sound information, a system wherein a user orders a desired sound fragment for which he pays and which he subsequently receives, is not yet known. It is therefore a first objective of the invention to provide a distribution system for sound information, which is coupled with a pay function, allowing a user of the system to select and obtain previously determined information for reproduction. However, the invention is not limited to this objective but may also relate to the distribution of film information. A further objective of the invention is to make the desired sound or film information available to the user at a moment in time determined by the user. Further objectives and advantages of the invention will be elucidated hereinbelow.

A system according to the invention is set out in claim 1.

The distribution system of the invention is characterized in that it is part of the Internet and comprises a host computer that can be linked with the source computer that the converter is embodied in the host computer and in use adds a check code to the head identifying the data processing machine, that the system is arranged such that in use said reconstruction member retains information on the data processing machine for the identification of the data processing machine and is downloated to the data processing machine from the host computer and that the reconstruction member has means for checking the check code identifying the data processing machine so that the reconstruction member only authorizes reconstruction of encoded information addressed to said data processing machine depending on said check code. This provides additional security because the reconstruction member, after it is linked in this manner with the data processing machine, only authorizes reconstruction of encoded information addressed to said data processing machine. The reconstruction member forms, as it were, a player by means of which the respective encoded sound information or film information (information of the second kind) can be reconstructed.

It may be noted that it is also possible that the host computer coincides with the source computer. It is also conceivable to completely leave out a separate source computer, and that on the host computer only encoded information, i.e. information of the second kind, is present.

This distribution system proposed in accordance with the invention makes it possible to transmit on request encoded information of films or music or sound fragments, to a data processing machine, usually a personal computer. On application, the user may then pay, for example, by means of a credit card account, or he may pay for the service by means of a prepaid account kept by the host computer and which is coupled to the respective data processing machine or user.

Where sound fragments or music is concerned, it is advantageous for the database information of the first kind to be comprised of MP3 music files. By means of such music files it is possible to provide a user with music of high quality regarding recording technique, comparable with the reproduction quality of the known compact disc.

Securing said source information from unauthorized use and illegal copying, i.e. use for which no appropriate payment has been made, is effectuated such that the head comprises status information relating to
a) the approved number of occasions the information of the second kind is converted into information of the first kind; and/or
b) the length of time during which the information of the second kind was authorized to be converted into information of the first kind; and/or
c) the authorization for making a copy.

In this manner it is possible to employ different tariffs, for example, for listening once to a certain piece of music or viewing a certain film or film fragment, or listening or viewing repeatedly or a predetermined number of times. It is also possible to link payment to a limited length of time, or as the case may be, to an unlimited length of time, wherein payment is not related to the number of times the file with the information of the second kind, and received by means of the data processing machine, has been used. Finally, payment may be linked to the possibility of using said information, after its conversion into information of the first kind for copying it, for example, onto a writable compact disc. To effectively secure the information traffic, and in particular to secure the payment of fees relevant to the use that will be made of the information, it is desirable for the information of the second kind to be provided with additional security. This may preferably be realized by incorporating a checksum in the head. By this means it is possible to visualize a file containing information of the second kind being processed without authorization, because the checksum will have an incorrect value.

By means of the check code identifying the data processing machine, the information transmitted is linked to a particular data processing machine so that copying and playing on another machine or by another user can be rendered impossible.

The data processing machine is to that end embodied with a reconstruction member for converting information of the second kind into information of the first kind, the operation of the reconstruction member depending on not only the status information but also on the check code.

The distribution system is preferably further embodied such that the reconstruction member comprises an arithmetic unit to determine a current checksum pertaining to the information of the second kind, and a comparator for comparing said current checksum with the checksum present in the head of the information. In this way the checksum information can be used effectively.

The reconstruction member is preferably incorporated in the head of the information of the second kind.

This greatly improves the integrity and resistance to undesirable manipulation of the system and the sound and/or image information made available. By this means a reconstruction member specifically adjusted to this information is provided for every separate fragment.

In the following, the invention will be further elucidated with reference to a non-limiting exemplary embodiment according to which music files can be made available to users. In this example, to which the invention is not limited, music files are made available on request and after payment via Internet. To this end the music fragments are obtained from a source computer comprising a central databank in which music files are recorded, classified according to country and/or performing artists and/or music style. This central file may be approached via an Internet site. This Internet site protects the central data file, but makes the music files in it available to users via encoded access. If the users meet certain conditions, the coded music files can be decoded, such that they may be listened to in the normal way. To this end the music files may be retrieved via this Internet website. On the site, new users are required to make known their name, E-mail address and password. The user thus identified is then able via a search program to search the desired product on the website. Having selected a particular music fragment, the user in the present example has the option of
a) playing the respective music fragment once or more than once;
b) playing within a predetermined time period;
c) recording the music fragment by burning a compact disc or the like.

The price the user has to pay for one of the above alternatives depends on the respective alternative. Payment is made by credit card or by making use of a prepaid account kept up to date on the website for the respective user. In order to be able to reconstruct the encoded information to the original information, the user links a reconstruction device or player to be obtained from the website to his personal computer. Alternatively, such a player may each time be transmitted together with a retrieved music file. Each time a music file is reproduced, the reconstruction device checks whether this is authorized by carrying out a check on data recorded in the head of information of the second kind, received by the personal computer. This head contains status information relating to the number of times or the length of time it is allowed to listen to, or make a copy of the respective music file, and further information relating to the data processing machine to which the information is transmitted. The head further contains a checksum, calculated on the basis of information of. the second kind recorded in the respective music fragment. If the results of all the checks are positive, the reconstruction device can convert the (encoded) information of the second kind into the (original) information of the first kind, to allow suitable reproduction by means of the known reproduction apparatus.

The invention provides a completely new distribution system providing new ways for the commercialization of music and film. An essential element of the invention is that the original and digitized files are protected against unauthorized use. The_invention provides a system, which is however, not completely resistant to cracking of the encoding being used to obtain the information of the second kind. However, an important advantage of the invention is that each separate fragment is encoded individually and that cracking the relevant code only provides access to the respective music fragment or image fragment without disclosing all the original information of the first kind present in the database. The invention uses a reconstruction device or player that is made available freely, and which comprises means for carrying out the necessary checks regarding status, identity of the data processing machine, and checksum, as explained above.

The above description is expressly to be understood as an exemplary embodiment that does not give a limitative description of the invention, but rather serves as elucidation, and therefore does not limit the protective scope derived from the appended claims.

## Claims

1. A distribution system for film or sound information comprising a digital database on a source computer, at least one information transport channel equipped for transmitting digital information, a converter for converting digital information of a first kind originating from the source computer into information of the second kind, wherein during use, the converter divides the digital information of the first kind into blocks, and inserts scrambling information between the blocks for the formation of the information of the second kind, and an information receiver embodied as a data processing machine which can be equipped with a reconstruction member for converting information of the second kind into information of the first kind,
which converter - during use - adds to a first block of said blocks a head containing at least address information relating to the information receiver, and status information relating to at least one item selected from a group comprising items a, b and c wherein a, b and c are defined as:
a. the approved number of occasions the information of the second kind is converted into information of the first kind;
b. the length of time during which the information of the second kind is authorized to be converted into information of the first kind;
c. the authorization for making a copy,
wherein the operation of the reconstruction member depends on at least the status information and wherein a reproduction unit for image or sound can be connected to the data processing machine, **characterized in that** the system is part of the Internet and comprises a host computer that during use is linked with the source computer, that the converter is embodied in the host computer and -in use- adds a check code to the head identifying the data processing machine, and that the system is arranged such that in use said reconstruction member retains information on the data processing machine for the identification of the data processing machine and is downloaded to the data processing machine from the host computer, and that the reconstruction member has means for checking the check code identifying the data processing machine so that the reconstruction member only authorizes reconstruction of encoded information addressed to said data processing machine depending on said check code.

2. A distribution system according to claim 1, **characterized in that** the database is comprised of MP3 music files.

3. A distribution system according to claim 1 or 2, **characterized in that** the head comprises a checksum.

4. A distribution system according to claim 3, **characterized in that** the operation of the reconstruction member depends on the checksum and the check code.

5. A distribution system according to one of the preceding claims, **characterized in that** the reconstruction member comprises an arithmetic unit to determine a current checksum pertaining to the information of the second kind, and a comparator for comparing said current checksum with the checksum present in the head of the information.

6. A distribution system according any one of claims 1-5, **characterized in that** the reconstruction member is incorporated in the head of the information of the second kind.

## Patentansprüche

1. Ein Distributionssystem für Film- oder Ton-Information, umfassend eine digitale Datenbank auf einem Quell-Computer, wenigstens einen Informationstransportkanal, der zum Transportieren von digitaler Information eingerichtet ist, einen Konverter zum Konvertieren digitaler Information einer ersten Art, die von dem Quell-Computer stammt, in Information der zweiten Art, wobei der Konverter während eines Verwendens die digitale Information der ersten Art in Blöcke unterteilt und zum Bilden der Information der zweiten Art Verwürfelungsinformation zwischen den Blöcken einsetzt, und einen Informationsempfänger, der als eine Datenverarbeitungsmaschine verwirklicht ist, die mit einem Rekonstruktionselement zum Konvertieren der zweiten Art in Information der ersten Art ausgestattet sein kann,
wobei der Konverter während eines Verwendens einem ersten Block der Blöcke einen Kopf hinzufügt, der wenigstens Adressinformation umfasst, die den Informationsempfänger betrifft, und Statusinformation, die wenigstens ein Element betrifft, das aus einer Gruppe ausgewählt ist, die Elemente a, b und c umfasst, wobei a, b und c definiert sind als:
a. Die zugelassene Anzahl des Vorkommens, dass die Information der zweiten Art in Information der ersten Art konvertiert wird;
b. Die Zeitspanne, während der die Information der zweiten Art autorisiert ist, in Information der ersten Art konvertiert zu werden;
c. Die Autorisierung zum Anfertigen einer Kopie,
wobei der Betrieb des Rekonstruktionselements wenigstens von der Statusinformation abhängt und wobei eine Reproduktionseinheit für Bild oder Ton mit der Datenverarbeitungsmaschine verbunden werden kann,
**dadurch gekennzeichnet, dass** das System Teil des Internets ist und einen Host-Computer umfasst, der während eines Verwendens mit dem Quell-Computer verbunden ist, dass der Konverter in dem Host-Computer eingerichtet ist und in Verwendung dem Kopf einen Prüfcode hinzufügt, der die Datenverarbeitungsmaschine identifiziert, und dass das System derart eingerichtet ist, dass in Verwendung das Rekonstruktionselement Information über die Datenverarbeitungsmaschine zur Identifikation der Datenverarbeitungsmaschine behält und von dem Host-Computer auf die Datenverarbeitungsmaschine heruntergeladen wird, und dass die Rekonstruktionseinheit ein Mittel zum Überprüfen des Prüfcodes hat, der die Datenverarbeitungsmaschine identifiziert, so dass das Rekonstruktionselement eine Rekonstruktion von codierter Information, die für die Datenverarbeitungsmaschine bestimmt ist, nur in Abhängigkeit von dem Prüfcode autorisiert.

2. Ein Distributionssystem nach Anspruch 1, **dadurch gekennzeichnet, dass** die Datenbank MP3-Musikdateien umfasst.

3. Ein Distributionssystem nach Anspruch 1 oder 2, **dadurch gekennzeichnet, dass** der Kopf eine Prüfsumme umfasst.

4. Eine Distributionssystem nach Anspruch 3, **dadurch gekennzeichnet, dass** der Betrieb des Rekonstruktionselements von der Prüfsumme und dem Prüfcode abhängt.

5. Ein Distributionssystem nach einem der vorgenannten Ansprüche, **dadurch gekennzeichnet, dass** das Rekonstruktionselement eine arithmetische Einheit umfasst, um eine aktuelle Prüfsumme zu ermitteln, die die Information der zweiten Art betrifft, und einen Vergleicher zum Vergleichen der aktuellen Checksumme mit der in dem Kopf der Information vorliegenden Checksumme umfasst.

6. Ein Distributionssystem nach einem der Ansprüche 1 bis 5, **dadurch gekennzeichnet, dass** das Rekonstruktionselement in dem Kopf der Information der zweiten Art eingearbeitet ist.

## Revendications

1. Système de distribution pour informations filmées ou sonores comprenant une base de données numérique sur un ordinateur source, au moins un canal de transport des informations, équipé pour transmettre des informations numériques, un convertisseur pour convertir des informations numériques d'un premier type ayant pour origine l'ordinateur source en informations du deuxième type, dans lequel, à l'utilisation, le convertisseur divise les informations numériques du premier type en blocs et insère des informations de cryptage entre les blocs pour la formation des informations du deuxième type, et un récepteur d'informations prenant la forme d'une machine de traitement de données, qui peut être équipée d'un élément de reconstruction pour convertir les informations du deuxième type en informations du premier type,
ledit convertisseur - pendant son utilisation - ajoute à un premier bloc desdits blocs, un en-tête contenant au moins des informations d'adresse concernant le récepteur d'informations, et des informations de statut concernant au moins un élément choisi dans un groupe comprenant les éléments a, b et c, dans lesquels a, b et c sont définis comme :
a : le nombre approuvé d'occasions où les informations du deuxième type sont converties en informations du premier type ;
b : la durée pendant laquelle les informations du deuxième type sont autorisées à être converties en informations du premier type ;
c : l'autorisation de réaliser une copie ;
dans lequel le fonctionnement de l'élément de reconstruction dépend au moins des informations de statut et dans lequel une unité de reproduction d'image ou de son peut être connectée à la machine de traitement des données,
***caractérisé en ce que*** le système fait partie de l'Internet et comprend un ordinateur hôte qui, pendant son utilisation, est relié à l'ordinateur source, ***en ce que*** le convertisseur est incorporé dans l'ordinateur hôte et, à l'utilisation, ajoute un code de contrôle à l'en-tête identifiant la machine de traitement des données, et ***en ce que*** le système est agencé de telle sorte qu'à l'utilisation ledit élément de reconstruction retienne les informations sur la machine de traitement des données pour l'identification de la machine et soit téléchargé dans la machine de traitement des données depuis l'ordinateur hôte, et ***en ce que*** l'élément de reconstruction a des moyens pour contrôler le code de contrôle identifiant la machine de traitement des données de telle sorte que l'élément de reconstruction n'autorise la reconstruction des informations codées adressées à ladite machine de traitement de données qu'en fonction dudit code de contrôle.

2. Système de distribution selon la revendication 1, ***caractérisé en ce que*** la base de données est constituée de fichiers de musique au format MP3.

3. Système de distribution selon la revendication 1 ou 2, ***caractérisé en ce que*** l'en-tête comprend une somme de contrôle.

4. Système de distribution selon la revendication 3, ***caractérisé en ce que*** le fonctionnement de l'élément de reconstruction dépend de la somme de contrôle et du code de contrôle.

5. Système de distribution selon l'une quelconque des revendications précédentes, ***caractérisé en ce que*** l'élément de reconstruction comprend une unité arithmétique pour déterminer une somme de contrôle courante appartenant aux informations du deuxième type, et un comparateur pour comparer ladite somme de contrôle courante avec la somme de contrôle présente en en-tête des informations.

6. Système de distribution selon l'une quelconque des revendications 1 à 5, ***caractérisé en ce que*** l'élément de reconstruction est incorporé dans l'en-tête des informations du deuxième type.
